# EUROPEAN PATENT APPLICATION

(11) **EP 4 432 718 A1**
(43) Date of publication of application: **18.09.2024**
(21) Application number: 21964057.0
(22) Date of filing: 11.11.2021
(51) Int. Cl.: H04W 16/28, H04W 72/04

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); SHIBAIKE, Naoya, Tokyo 100-6150 (JP); HARADA, Hiroki, Tokyo 100-6150 (JP); NAGATA, Satoshi, Tokyo 100-6150 (JP)
(74) Representative: Hoffmann Eitle
(86) International application number: PCT/JP2021/041573
(87) International publication number: WO 2023/084702

(57) **Abstract**

A terminal according to one aspect of the present disclosure includes: a control section configured to perform control to report at least one of a first report value related to a UL coherent type for each band, a second report value related to the UL coherent type for each band combination, and a third report value related to the UL coherent type for each band in the band combination; and a receiving section configured to receive information on a codebook type configured based on at least one of the first report value, the second report value, and the third report value.

## Description

### Technical Field

The present disclosure relates to a terminal, a radio communication method, and a base station in next-generation mobile communication systems.

### Background Art

In a universal mobile telecommunications system (UMTS) network, specifications of long term evolution (LTE) have been drafted for the purpose of further increasing data rates, providing low latency, and the like (Non Patent Literature 1). Furthermore, the specifications of LTE-Advanced (3GPP Rel. 10 to 14) have been drafted for the purpose of further increasing capacity and advancement of LTE (third generation partnership project (3GPP) release (Rel.) 8 and 9).

Successor systems to LTE (for example, also referred to as the 5th generation mobile communication system (5G), 5G+ (plus), New Radio (NR), or 3GPP Rel. 15 and subsequent releases) are also under study.

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010

### Summary of Invention

### Technical Problem

Rel. 15 NR supports reporting coherent types (for example, non coherent, partial coherent, and full coherent) for each band (per band) as UE capability per application of UL MIMO.

In Rel. 16/17 NR and later, it is also assumed that the coherent type is reported for each band combination (band combination). However, when a report for each combination of bands is supported/applied, a way of controlling the report becomes a problem. If the UE capability is not appropriately reported in consideration of the combination of bands, communication quality may deteriorate.

Therefore, an object of the present disclosure is to provide a terminal, a radio communication method, and a base station capable of appropriately reporting UE capability even in a case of considering a combination of bands.

### Solution to Problem

A terminal according to one aspect of the present disclosure includes: a control section configured to perform control so as to report at least one of a first report value related to a UL coherent type for each band, a second report value related to the UL coherent type for each band combination, and a third report value related to the UL coherent type for each band in the band combination; and a receiving section configured to receive information on a codebook type configured based on at least one of the first report value, the second report value, and the third report value.

### Advantageous Effects of Invention

According to one aspect of the present disclosure, it is possible to appropriately report UE capability even in a case of considering a combination of bands.

### Brief Description of Drawings

[FIG. 1] Fig. 1 is a diagram illustrating an example of association between a coherent type and a TPMI index.
[FIG. 2] Figs. 2A and 2B are diagrams illustrating an example of a report of report values (for example, a first report value to a third report value) regarding the coherent type.
[FIG. 3] Fig. 3 is a diagram illustrating control of whether to report the report values (for example, the first report value to the third report value) regarding the coherent type.
[FIG. 4] Fig. 4 is a diagram illustrating an example of a schematic configuration of a radio communication system according to one embodiment.
[FIG. 5] Fig. 5 is a diagram illustrating an example of a configuration of a base station according to one embodiment.
[FIG. 6] Fig. 6 is a diagram illustrating an example of a configuration of a user terminal according to one embodiment.
[FIG. 7] Fig. 7 is a diagram illustrating an example of a hardware configuration of the base station and the user terminal according to one embodiment.
[FIG. 8] Fig. 8 is a diagram illustrating an example of a vehicle according to one embodiment.

### Description of Embodiments

### (Physical Uplink Shared Channel (PUSCH) Precoder)

In New Radio (NR), it is considered that a user equipment (UE) will support at least one of codebook (CB)-based transmission or non-codebook (NCB)-based transmission.

For example, it is considered that the UE uses at least a measurement reference signal (sounding reference signal (SRS)) resource index (SRI) to determine a precoder (precoding matrix) for at least one of CB-based physical uplink shared channel (PUSCH) transmission and NCB-based physical uplink shared channel (PUSCH) transmission.

In a case of the CB-based transmission, the UE may determine the precoder for PUSCH transmission based on the SRI, a transmitted rank indicator (TRI), a transmitted precoding matrix indicator (TPMI), and the like. In a case of the NCB-based transmission, the UE may determine the precoder for PUSCH transmission based on the SRI.

The SRI, the TRI, the TPMI, and the like may be notified to the UE using downlink control information (DCI). The SRI may be designated by an SRS resource indicator field (SRI field) of the DCI, or may be designated by a parameter "srs-Resourcelndicator" included in a radio resource control (RRC) information element "ConfiguredGrantConfig" of a configured grant PUSCH. The TRI and the TPMI may be specified by a field of precoding information of the DCI and the number of layers ("precoding information and number of layers" field).

The UE may report UE capability information on a coherent type, and the coherent type based on the UE capability information may be configured by higher layer signaling from a base station. The UE capability information may be coherent type information (which may also be represented by an RRC parameter "pusch-TransCoherence") used by the UE in the PUSCH transmission.

In the present disclosure, the higher layer signaling may be any of, for example, radio resource control (RRC) signaling, medium access control (MAC) signaling, broadcast information, and the like, or a combination thereof.

For example, a MAC control element (MAC CE), a MAC protocol data unit (PDU), or the like may be used for the MAC signaling. The broadcast information may be, for example, a master information block (MIB), a system information block (SIB), or the like.

The UE may determine the precoder used for the PUSCH transmission based on the coherent type information (which may also be represented by an RRC parameter "codebookSubset") included in PUSCH configuration information ("PUSCH-Config" information element of RRC signaling) notified by higher layer signaling. The UE may be configured with a subset of PMls designated by the TPMI, by codebookSubset.

It is noted that the coherent type may be designated by any one of full coherent (fully coherent or coherent), partial coherent, and non coherent, or a combination of at least two of them (for example, which may also be represented by parameters such as "fullyAndPartialAndNonCoherent" and "partialAndNonCoherent").

The full coherent may mean that all the antenna ports used for transmission are synchronized (which may be expressed as phase-matched, the same precoder applied, or the like). The partial coherent may mean that some ports of the antenna ports used for transmission are synchronized, but that some ports and other ports cannot be synchronized. The non coherent may mean that each antenna port used for transmission cannot be synchronized.

It is noted that a UE that supports a full-coherent coherent type may be assumed to support partial coherent and non-coherent coherent types. A UE that supports the partial-coherent coherent type may be assumed to support the non-coherent coherent type.

In the present disclosure, the coherent type may be interchangeable with a precoder type, a coherency, a PUSCH transmission coherence, a coherence type, a codebook type, a codebook subset, a codebook subset type, or the like.

The UE may determine the precoding matrix corresponding to a TPMI index obtained from the DCI that schedules UL transmission (for example, DCI format 0_1. the same applies hereinafter) from multiple precoders (may be referred to as precoding matrices, a codebook, or the like) for CB-based transmission.

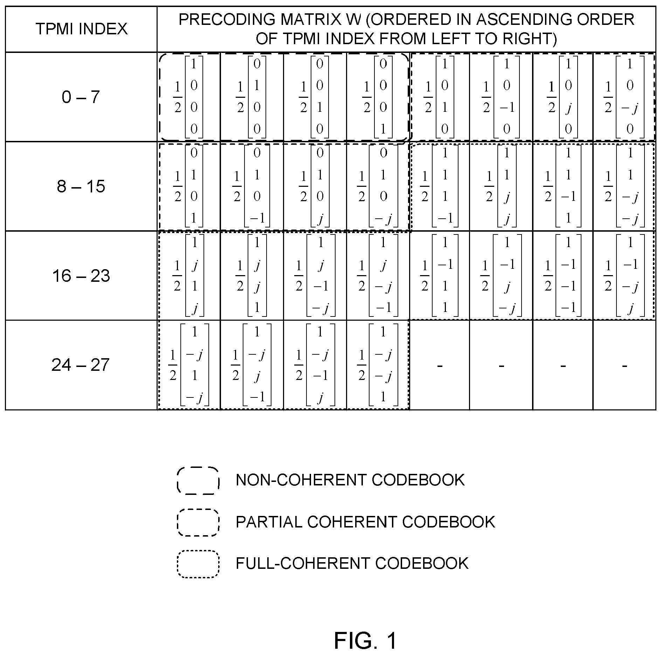

Fig. 1 is a diagram illustrating an example of association between a coherent type and a TPMI index. Fig. 1 is a table showing a precoding matrix W for single layer transmission using four antenna ports in discrete Fourier transform spread orthogonal frequency division multiplexing (OFDM) (DFT-s-OFDM) (with transform precoding enabled).

In Fig. 1, if the codebook type (codebookSubset) is fully and partial and non coherent (fullyAndPartialAndNonCoherent), the UE is notified of any TPMI from 0 to 27 for single layer transmission. In addition, if the codebook type is partial and non coherent (partialAndNonCoherent), the UE is configured with any TPMI from 0 to 11 for single layer transmission. If the codebook type is non coherent (nonCoherent), the UE is configured with any TPMI from 0 to 3 for single layer transmission.

Fig. 1 is a table defined in NR Rel. 15. In this table, if a full coherent transmit power corresponding to indexes 12 to 27 is set to 1 (= (1/2)² * 4), a partial coherent transmit power corresponding to indexes 4 to 11 is set to 1/2 (= (1/2)² * 2), and a non coherent transmit power corresponding to indexes 0 to 3 is set to 1/4 (= (1/2)² * 1).

In other words, according to NR Rel. 15 specifications, the use of a part of codebooks in the UE performing the codebook-based transmission using a plurality of ports has a smaller transmit power than that of the transmission using a single port in some cases (full power transmission is unable).

It is noted that, as illustrated in Fig. 1, the precoding matrix in which only one of the components in respective columns is non-zero may be referred to as a non-coherent codebook. The precoding matrix in which a given number (but not all) of components in respective columns are non-zeros may be referred to as a partial coherent codebook. The precoding matrix in which all components in respective columns are non-zeros may be referred to as a full-coherent codebook.

The non-coherent codebook and the partial coherent codebook may also be referred to as antenna selection precoders. The full-coherent codebook may also be referred to as a non-antenna selection precoder.

It is noted that, in the present disclosure, the partial coherent codebook may correspond a codebook (for example, codebooks of TPMls = 4 to 11 for single layer transmission using four antenna ports) obtained by excluding codebooks corresponding to TPMls designating a UE configured with a non-coherent codebook subset (for example, RRC parameter "codebookSubset" = "noncoherent") among codebooks (precoding matrices) corresponding to TPMls designating a UE configured with a partial coherent codebook subset (for example, RRC parameter "codebookSubset" = "partialAndNonCoherent") by the DCI for the codebook-based transmission.

It is noted that, in the present disclosure, the full-coherent codebook may correspond to a codebook (for example, codebooks of TPMls = 12 to 27 for single layer transmission using four antenna ports) obtained by excluding codebooks corresponding to TPMls designating a UE configured with a partial coherent codebook subset (for example, RRC parameter "codebookSubset" = "partialAndNonCoherent") among codebooks (precoding matrix) corresponding to TPMls designating a UE configured with a full-coherent codebook subset (for example, RRC parameter "codebookSubset" = "fullyAndPartialAndNonCoherent") by DCI for codebook-based transmission.

### (UE Capability Information Report (UE capability report))

The UE reports capability information of its own terminal to a network (for example, a base station or an operator) for each function used for communication. UE capability information reported for each function is reported in various units such as per UE and per band.

The network controls radio communication (for example, transmission/reception) with each UE, based on the capability information reported from the UE. On the other hand, even if UE capability information (for example, UE capability information or the like for a band that is not specified) not used in the radio communication system is reported to the network from the UE, the network cannot use the reported UE capability information, so that useless information is reported.

Therefore, before the UE reports the UE capability information of its own terminal, the network may notify the UE of information on communication conditions (for example, a supported band or the like) used/supported in the network (or a communication system used by the network) (refer to Fig. 1). The UE may determine the content/value of the UE capability information (for example, UECapabilitylnformation) to be reported to the network, based on the information notified from the network.

The information notified from the network to the UE may be referred to as a UE capability query/UE capability inquiry (for example, UECapabilityEnquiry) or a UE capability request filter (for example, UE-CapabilityRequestFilter).

That is, the network may notify the UE of information on the UE capability that needs to be reported (for example, a parameter and a parameter range) or information on the UE capability that does not need to be reported (for example, a parameter and a parameter range) in advance.

The UE capability inquiry (for example, UECapabilityEnquiry) information may be included in a given message transmitted from the network to the UE. The given message may be a DL-DCCH-message. The UE capability inquiry information may include information (for example, capabilityRequestFilter or UE-CapabilityRequestFilterNR) that the network requests the UE to filter the UE capability. The information requesting to filter the UE capability may include information (for example, CodebookParameterFilter) regarding filter of codebook parameters corresponding to channel state information (CSI).

For example, in an existing system (for example, before Rel. 16), it is supported that the UE reports information on a CSI report as the UE capability information.

### (Band Combination)

When the UE performs communication combining a plurality of bands, it is assumed that parameters and the like of each signal/channel are configured in each band.

A case in which the UE that supports communication using a combination of bands shares a specific parameter (for example, a CSI process unit (alternatively, a CSI control unit)) between the bands is also supported. For example, it is conceivable that UEs that share the CSI process unit between the bands have the same CSI processing capability both within and between the bands. The combination of bands may also be referred to as a band combination (BC).

Therefore, it is assumed that the UE supporting the BC reports the UE capability of the CSI codebook for each combination of bands, in addition to the UE capability of the CSI codebook for each band. For example, it is assumed that the UE supporting the BC reports a given parameter for each band combination (BC).

On the other hand, in the future NR, it is also conceivable to report a UL MIMO coherent type also for each band combination (BC) in relation to transmission switch (for example, Tx switch).

In the existing system (for example, Rel. 15), when UL MIMO is performed, non coherent, partial coherent, and full coherent are reported as UE capability (for example, pusch-TransCoherentce). When CB-based MIMO is applied, codebooks that can be configured for the UE are different depending on reports from the UE. Further, in the case of non-codebook-based MIMO as well, the UE operation varies depending on the coherent type.

However, when a coherent type report for each BC (for example, per BC) is performed in addition to or instead of a coherent type report for each band (for example, per band), a way of controlling the coherent type report for each BC becomes a problem.

The present inventors have focused on a point that the coherent type report for each band combination can be introduced/supported, studied a coherent type report for each band/each band combination, and conceived one aspect of the present embodiment.

Hereinafter, embodiments according to the present disclosure will be described in detail with reference to the drawings. It is noted that each of the following aspects (for example, each case) may be used independently, or may be applied by combining at least two of the aspects.

In the present disclosure, "A/B" and "at least one of A or B" may be interchangeable with each other. Furthermore, in the present disclosure, "A/B/C" may mean "at least one of A, B, and C".

In the present disclosure, activate, deactivate, instruct (or indicate), select, configure, update, determine, and the like may be interchangeable with each other. In the present disclosure, support, control, can control, operate, can operate, and the like may be interchangeable with each other.

In the present disclosure, radio resource control (RRC), an RRC parameter, an RRC message, an upper layer parameter, an information element (IE), a setting, and the like may be interchangeable with each other. In the present disclosure, a Medium Access Control control element (MAC control element (CE)), an update command, an activation/deactivation command, and the like may be interchangeable with each other.

In the present disclosure, the higher layer signaling may be any of, for example, radio resource control (RRC) signaling, medium access control (MAC) signaling, broadcast information, and the like, or a combination thereof.

In the present disclosure, the MAC signaling may use, for example, the MAC control element (MAC CE), a MAC protocol data unit (PDU), or the like. The broadcast information may be, for example, a master information block (MIB), a system information block (SIB), remaining minimum system information (RMSI), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeable with each other. In the present disclosure, a sequence, a list, a set, a group, a cohort, a cluster, a subset, and the like may be interchangeable with each other.

In the present disclosure, a panel, a UE panel, a panel group, a beam, a beam group, a precoder, an uplink (UL) transmission entity, a transmission and reception point (transmission/reception point (TRP)), a base station, spatial relation information (SRI), a spatial relation, an SRS resource indicator (SRI), a control resource set (CORESET), a physical downlink shared channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a physical uplink control channel (PUCCH) group, or a PUCCH resource group), a resource (for example, a reference signal resource and an SRS resource), a resource set (for example, a reference signal resource set), a CORESET pool, a downlink transmission configuration indication state (TCI state) (DL TCI state), an uplink TCI state (UL TCI state), a unified TCI state, a common TCI state, a quasi-co-location (QCL), QCL assumption, and the like may be interchangeable with each other.

In the following description, a coherent type of UL (for example, a coherent type of PUSCH) will be described as an example of a coherent type serving as the UE capability information, but the applicable UE capability is not limited thereto.

### (Radio Communication Method)

### <First Embodiment>

In the first embodiment, a description will be given as to an example of a case of controlling a coherent type report in consideration of a coherent type in the band combination (alternatively, each band included in the band combination).

In the present disclosure, a report for each band (for example, per band) may indicate that the report is performed for each band, a report for each band combination (for example, per band combination) may indicate that the report is performed for each band combination, and a report for each band in the band combination (for example, per band in the band combination) may indicate that the report is performed for each band for each band combination.

In the coherent type report, at least one of the non coherent, the partial coherent, and the full coherent may be reported.

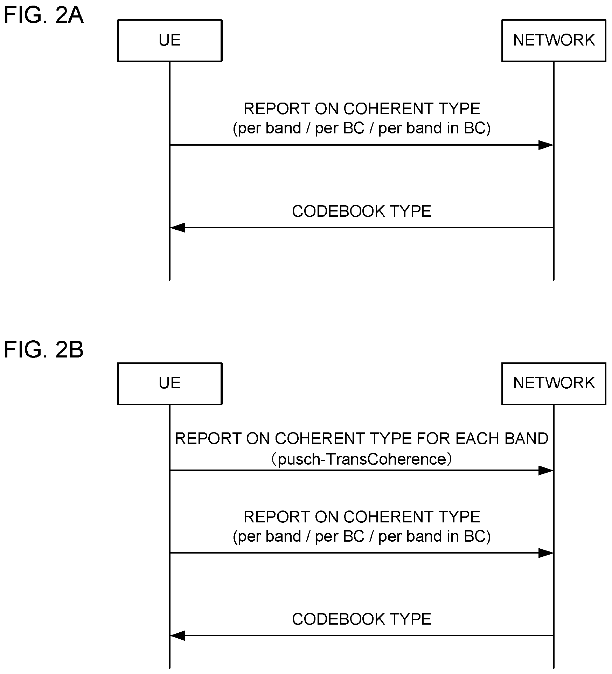

The UE may perform the coherent type report for any one of each band, each band combination, and each band in the band combination (refer to Fig. 2A). Upon receiving a report of UE capability (here, coherent type) from the UE, the network/base station may configure higher layer parameters (for example, PUSCH configuration) that include information on the codebook type (or codebook subset) based on the reported UE capability.

For example, the UE may report at least one of the following first report value to third report value (or any two combinations/three combinations). In addition, the UE may report at least one of the following first report value to third report value (or any two combinations/three combinations) in addition to a coherent type (pusch-TransCoherence) defined/supported in the existing system (for example, Rel. 15) (refer to Fig. 2B). The coherent type (pusch-TransCoherence) defined/supported in the existing system (for example, Rel. 15) is reported for each band.

### [First Report Value]

The first report value may be a report value of a coherent type (for example, pusch-TransCoherence_r16) reported for each band (per band).

The report value of the coherent type reported for each band (per band) may be, for example, non coherent/partial coherent/full coherent ({nonCoherent, partialCoherent, fullCoherent}).

In addition, a report value for each band in a case where BC is assumed may be selected.

### [Second Report Value]

The second report value may be a report value of a coherent type (for example, pusch-TransCoherencelnBC_r16) reported for each band combination (per BC).

The report value of the coherent type reported for each band combination (per BC) may be, for example, non coherent/partial coherent/full coherent ({nonCoherent, partialCoherent, fullCoherent}).

Furthermore, the report may be controlled based on a total value or a maximum value of each coherent type of all bands included in the BC in a case where a given BC is assumed.

For example, the largest number of coherent types among the coherent types corresponding to each band included in the BC may be reported. Alternatively, when at least one band included in the BC includes a specific coherent type (for example, non coherent), the specific coherent type may be reported.

The fact that a value of a given BC is full coherent may mean that all bands included in the BC are full coherent.

### [Third Report Value]

The third report value may be a report value of a coherent type (for example, pusch-TransCoherencePerBandlnBC_r16) reported for each band in the band combination (for example, per band in the band combination).

The report value of the coherent type reported for each band in the BC (for example, per band in the band combination) may be non coherent/partial coherent/full coherent ({nonCoherent, partialCoherent, fullCoherent}).

In addition, a report value assuming a given band in a given BC may be reported. For example, the fact that a value of a given band included in a given BC is full coherent may mean that the band is full coherent in a case where carrier aggregation is performed using a combination of the bands included in the BC (alternatively, in a case where the PUSCH is configured by a combination of the bands included in the BC).

For example, the UE may report the first report value and the second report value (the third report value is not reported). Alternatively, the UE may report the second report value and the third report value (the first report value is not reported). Alternatively, the UE may report all of the first report value, the second report value, and the third report value. Alternatively, the UE may report the first report value and the third report value (the second report value is not reported).

In the UE, a codebook type in which the report value (for example, at least one of the first report value to the third report value) reported to the base station is satisfied may be configured through PUSCH configuration (for example, PUSCH-config). A codebook type may be interchangeable with a codebook subset (for example, codebookSubset). At least one of full and partial and non coherent/partial and non coherent/non coherent ({fullyandPartialAndNonCoherent, partialAndNonCoherent, nonCoherent}) may be configured by the codebook subset.

For example, it is assumed that a given BC #1 corresponds to non coherent and a band #1 included in the BC #1 corresponds to full coherent. In such a case, in a case of matching with a low report value among the plurality of report values, non coherent may be used (for example, a codebook type corresponding to non coherent is applied/configured). Alternatively, in a case of matching with a high report value among the plurality of report values, full coherent may be used (for example, a codebook type corresponding to full coherent is applied/configured). Alternatively, in a case of taking a mean/average value among the plurality of report values, partial coherent may be used (for example, a codebook type corresponding to partial coherent is applied/configured).

### [Variation]

As the second report value (the report value of the coherent type reported for each BC (per BC)), the total number/maximum number of each coherent type may be reported. For example, non coherent/partial coherent/full coherent may be respectively quantified, and a maximum value or a total value of each coherent type corresponding to each of the plurality of bands (for example, all bands) included in the BC may be reported.

For example, a given numerical value (or a numerical range) may be configured for non coherent/partial coherent/full coherent.
Non coherent {0, 1,..., M₁}
Partial coherent {0, 1,..., M₂}
Full coherent {0, 1,..., M₃}

The values of M₁ to M₃ may be defined in the specification, or may be configured from the base station to the UE by using higher layer signaling or the like. The values of M₁ to M₃ may be configured/defined in common or may be configured/defined separately.

For example, in a case where the value of full coherent in a given BC is 3, it may mean that full coherent can be configured in up to three bands included in the BC and reported to be full coherent for each band (per band).

Non coherent can be considered as another two (for example, partial coherent/full coherent) sub-functions, and partial coherent can be considered as a full coherent sub-function. Therefore, a case in which non coherent = 10, partial coherent = 5, and full coherent = 3 are reported for the given BC is assumed. In such a case, it may mean that it is possible to configure full coherent in up to three bands included in the BC and reported as full coherent for each band (per band). Furthermore, it may mean that partial coherent can be configured in up to five bands included in the BC and reported as partial coherent or full coherent for each band (per band). Furthermore, it may mean that non coherent can be configured in up to ten bands included in the BC and reported as non coherent, partial coherent, or full coherent for each band (per band).

When the total number of all coherent types (alternatively, the number of bands) is reported for each band combination (per BC), an upper limit of the total number of any codebook types (alternatively, respective codebook types) that can be configured for all bands included in the BC may be defined.

Here, a case in which the total number is reported as the report value has been described, but the present disclosure is not limited thereto, and the total number may be interchangeable with the maximum number of each coherent type/all coherent types included in a given BC.

### <Second Embodiment>

In a second embodiment, a description will be given as to UE capability (for example, UE cap.) in a case where at least one of the first report value to the third report value indicated in the first embodiment is supported.

The UE capability corresponding to at least one of the first report value to the third report value described in the first embodiment may not be read (alternatively, it cannot be grasped) by the base station of the existing system (for example, Rel. 15). When the UE is made operable in the base station of the existing system based on the UE capability corresponding to at least one of the first report value to the third report value, the UE needs to additionally report at least one of the first report value to the third report value in addition to the report value (for example, pusch-TransCoherence reported for each band) defined in the existing system.

The report value (for example, pusch-TransCoherence reported for each band) defined in the existing system may be reported according to an existing specification (a value assuming all supported BCs may be reported).

In the UE capability in a case where at least one of the first report value to the third report value indicated in the first embodiment is supported, as the value reported for each band (per band) (for example, the first report value), a value for each band in a case where a band combination reported for each BC is assumed may be reported.

That is, the value (for example, the first report value (pusch-TransCoherence_r16)) reported for each band (per band) may be reported separately from the value (pusch-TransCoherence) reported for each band in the existing system (refer to Fig. 1B). In such a case, the first report value (pusch-TransCoherence_r16) and the value (pusch-TransCoherence) reported for each band in the existing system may have different reported contents/values.

For example, it may be allowed/supported that a given UE reports, for a given band, different coherent types between a report for each band (per band) of the existing system (for example, Rel. 15) and a report for each band (for example, the first report value) indicated in the first embodiment. For example, the report value (pusch-TransCoherence) for each band (per band) of the existing system (for example, Rel. 15) may be (=) non coherent, and the first report value (pusch-TransCoherence_r16) may be (=) full coherent.

Based on the report value from the UE (or report of the UE capability), the coherent type of the PUSCH may be configured with a given higher layer parameter (for example, PUSCH configuration (for example, PUSCH-config)).

For example, in a band, a codebook subset including the coherent type reported using at least one of the report value (pusch-TransCoherence) for each band (per band) of the existing system and the first report value (pusch-TransCoherence_r16) may be configured in the UE (for example, in the BWP in the band) by PUSCH configuration.

Any codebook subset may be configured when the report value (pusch-TransCoherence) for each band (per band) of the existing system (for example, Rel. 15) is (=) non coherent, and the first report value (pusch-TransCoherence_r16) is (=) full coherent. When the report value is only pusch-TransCoherence, only non coherent can be configured. However, by reporting the first report value (pusch-TransCoherence_r16), it is possible to configure full coherent, which enables better use of a MIMO precoder. As a result, UL characteristics can be improved.

In this manner, by allowing/supporting that the contents/values respectively included in the first report value (pusch-TransCoherence_r16) and the value (pusch-TransCoherence) reported for each band in the existing system are different, it is possible to flexibly configure the codebook type based on a plurality of report contents.

Therefore, the value for each band in a case where the band combination reported for each BC is assumed is reported as the first report value, thereby making it possible to report a more appropriate coherent type than the value (pusch-TransCoherence) reported for each band in the existing system.

As an example, the UE that supports UE capability indicated in the first embodiment may notify the UE capability of the existing system for each band with a conservative numerical value (for example, conservative numbers), notify new UE capability for each band (for example, the first/third report values) with a positive numerical value (braver numbers), and further notify UE capability for each BC (for example, the second report value) used only for an inter-band CA case. The base station of the existing system may read the UE capability of the existing system for each band with the conservative numerical value, and a new base station may ignore (not consider) the UE capability of the existing system for each band, may read the new UE capability for each band (for example, the first/third report values) with a larger numerical value, and may read the new UE capability for each BC (for example, the second report value) in the inter-band CA case.

In this manner, the UE of the existing system may signal the UE capability of the existing system for each band only with the conservative numerical value. The base station of the existing system may read the UE capability of the existing system for each band with the conservative numerical value. The new base station may read the UE capability of the existing system for each band with the conservative numerical value.

### <Third Embodiment>

In a third embodiment, a description will be given as to control of whether to report the UE capability (for example, UE cap.) in a case where at least one of the first report value to the third report value indicated in the first embodiment is supported.

Whether to report the UE capability (for example, UE cap.) in a case where at least one of the first report value to the third report value indicated in the first embodiment is supported may be configured based on a UE capability query/a UE capability inquiry (for example, UECapabilityEnquiry). The UE may determine whether to report (alternatively, whether a report is required) based on the UE capability query/the UE capability inquiry (for example, UECapabilityEnquiry).

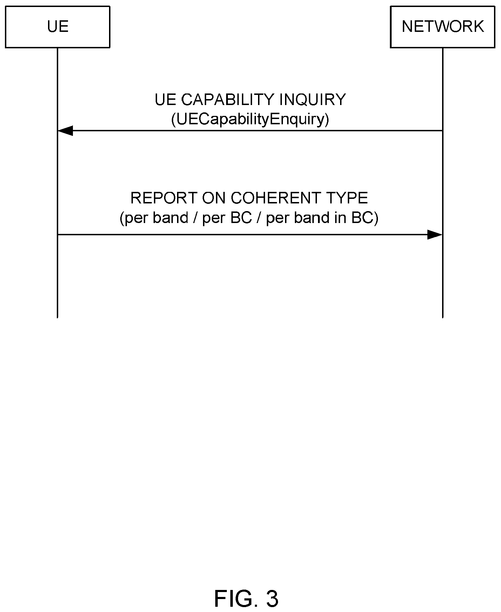

For example, the UE may perform a control operation to report the UE capability (for example, at least one of the first report value to the third report value) indicated in the first embodiment only when the report of the codebook type is configured (for example, pusch-TransCoherencePerBandlnBC={true} is configured) by the UE capability query/the UE capability inquiry (for example, UECapabilityEnquiry) (refer to Fig 3).

When the UE capability indicated in the first embodiment is reported, it may be required to report the report value (pusch-TransCoherence) for each band (per band) of the existing system.

Alternatively, when the report of the UE capability indicated in the first embodiment is configured (for example, pusch-TransCoherencePerBandlnBC={true} is configured) by the UE capability query/the UE capability inquiry (for example, UECapabilityEnquiry), the UE reports only the UE capability indicated in the first embodiment, and the report of the report value (pusch-TransCoherence) for each band (per band) of the existing system may not be required. That is, in the first embodiment, the UE may perform a control operation so as to report the UE capability (for example, at least one of the first report value to the third report value) indicated in the first embodiment instead of the report value (pusch-TransCoherence) for each band (per band) of the existing system.

It is noted that, in the existing system (for example, Rel. 15), the base station does not configure the report value (pusch-TransCoherence) for each band (per band) of the existing system using the UE capability query/the UE capability inquiry (for example, UECapabilityEnquiry) (for example, pusch-TransCoherence={true} is not configured). That is, the UE is configured to report the report value (pusch-TransCoherence) for each band (per band) of the existing system regardless of configuration/notification from the base station.

When the report of the UE capability indicated in the first embodiment is not configured (for example, pusch-TransCoherencePerBandlnBC={true} is not configured) by the UE capability query/the UE capability inquiry (for example, UECapabilityEnquiry), the UE may perform a control operation so as not to report the UE capability indicated in the first embodiment (alternatively, no report is required). In this case, the UE may perform a control operation so as to report the report value (pusch-TransCoherence) for each band (per band) of the existing system.

Alternatively, the UE may alternatively perform a control operation so as to report the report value (pusch-TransCoherence) for each band (per band) of the existing system regardless of whether the report of the UE capability indicated in the first embodiment is configured by the UE capability query/the UE capability inquiry (for example, UECapabilityEnquiry).

Alternatively, the base station may configure/notify, in the UE/to the UE, which report value of the first report value to the third report value is to be reported. The UE may determine the report value to be reported (for example, at least one of the first report value to the third report value) based on information configured/notified from the base station.

### (Radio Communication System)

Hereinafter, a configuration of a radio communication system according to one embodiment of the present disclosure will be described. In this radio communication system, communication is performed using any one of the radio communication methods according to the embodiments of the present disclosure or a combination thereof.

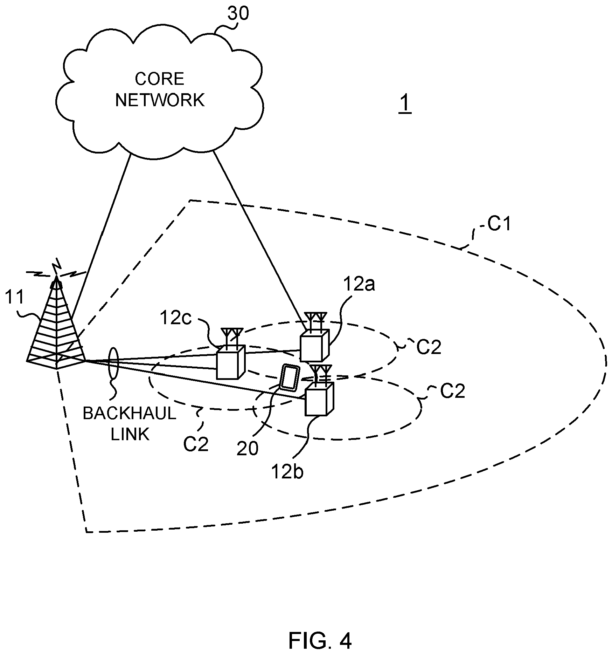

Fig. 4 is a diagram illustrating an example of a schematic configuration of a radio communication system according to one embodiment. A radio communication system 1 may be a system that implements communication using long term evolution (LTE), 5th generation mobile communication system New Radio (5G NR), and the like drafted as the specification by third generation partnership project (3GPP).

Further, the radio communication system 1 may support dual connectivity (multi-RAT dual connectivity (MR-DC)) between a plurality of radio access technologies (RATs). The MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In the EN-DC, an LTE (E-UTRA) base station (eNB) is a master node (MN), and an NR base station (gNB) is a secondary node (SN). In the NE-DC, an NR base station (gNB) is MN, and an LTE (E-UTRA) base station (eNB) is SN.

The radio communication system 1 may support dual connectivity between a plurality of base stations in the same RAT (for example, dual connectivity in which both MN and SN are NR base stations (gNB) (NR-NR dual connectivity (NN-DC)).

The radio communication system 1 may include a base station 11 that forms a macro cell C1 with a relatively wide coverage, and base stations 12 (12a to 12c) that are disposed within the macro cell C1 and that form small cells C2 narrower than the macro cell C1. A user terminal 20 may be positioned in at least one cell. The arrangement, number, and the like of cells and the user terminals 20 are not limited to the aspects illustrated in the drawings. Hereinafter, the base stations 11 and 12 will be collectively referred to as "base stations 10" when the base stations 11 and 12 are not distinguished from each other.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a first frequency band (frequency range 1 (FR1)) or a second frequency band (frequency range 2 (FR2)). The macro cell C1 may be included in the FR1, and the small cell C2 may be included in the FR2. For example, the FR1 may be a frequency band of 6 GHz or less (sub-6 GHz), and the FR2 may be a frequency band higher than 24 GHz (above-24 GHz). It is noted that the frequency bands, definitions, and the like of the FR1 and FR2 are not limited thereto, and, for example, the FR1 may correspond to a frequency band higher than the FR2.

Further, the user terminal 20 may perform communication on each CC using at least one of time division duplex (TDD) and frequency division duplex (FDD).

The plurality of base stations 10 may be connected to each other in a wired manner (for example, an optical fiber, an X2 interface, or the like in compliance with common public radio interface (CPRI)) or in a radio manner (for example, NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of evolved packet core (EPC), 5G core network (5GCN), next generation core (NGC), or the like.

The user terminal 20 may be a terminal that corresponds to at least one of communication methods such as LTE, LTE-A, and 5G.

In the radio communication system 1, a radio access method based on orthogonal frequency division multiplexing (OFDM) may be used. For example, in at least one of downlink (DL) and uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. It is noted that in the radio communication system 1, another radio access method (for example, another single carrier transmission method or another multi-carrier transmission method) may be used as the UL and DL radio access method.

In the radio communication system 1, a downlink shared channel (physical downlink shared channel (PDSCH)) shared by the user terminals 20, a broadcast channel (physical broadcast channel (PBCH)), a downlink control channel (physical downlink control channel (PDCCH)), and the like may be used as downlink channels.

In the radio communication system 1, an uplink shared channel (physical uplink shared channel (PUSCH)) shared by the user terminals 20, an uplink control channel (physical uplink control channel (PUCCH)), a random access channel (physical random access channel (PRACH)), and the like may be used as uplink channels.

User data, higher layer control information, a system information block (SIB), and the like are transmitted on the PDSCH. The user data, higher layer control information, and the like may be transmitted on the PUSCH. Furthermore, a master information block (MIB) may be transmitted on the PBCH.

Lower layer control information may be transmitted on the PDCCH. The lower layer control information may include, for example, downlink control information (DCI) including scheduling information of at least one of the PDSCH and the PUSCH.

It is noted that the DCI that schedules the PDSCH may be referred to as DL assignment, DL DCI, or the like, and the DCI that schedules PUSCH may be referred to as UL grant, UL DCI, or the like. It is noted that the PDSCH may be interchangeable with DL data, and the PUSCH may be interchangeable with UL data.

For detection of the PDCCH, a control resource set (CORESET) and a search space may be used. The CORESET corresponds to a resource that searches for DCI. The search space corresponds to a search area and a search method for PDCCH candidates. One CORESET may be associated with one or more search spaces. UE may monitor CORESET associated with a given search space based on search space configuration.

One search space may correspond to a PDCCH candidate corresponding to one or more aggregation levels. One or more search spaces may be referred to as a search space set. It is noted that "search space", "search space set", "search space configuration", "search space set configuration", "CORESET", "CORESET configuration", and the like in the present disclosure may be interchangeable with each other.

Uplink control information (UCI) including at least one of channel state information (CSI), delivery acknowledgement information (which may be referred to as, for example, hybrid automatic repeat request acknowledgement (HARQ-ACK), ACK/NACK, or the like), and scheduling request (SR) may be transmitted on the PUCCH. A random access preamble for establishing connection with a cell may be transmitted on the PRACH.

It is noted that in the present disclosure, downlink, uplink, and the like may be expressed without "link". Various channels may be expressed without adding "physical" at the beginning thereof.

In the radio communication system 1, a synchronization signal (SS), a downlink reference signal (DL-RS), and the like may be transmitted. In the radio communication system 1, a cell-specific reference signal (CRS), a channel state information reference signal (CSI-RS), a demodulation reference signal (DMRS), a positioning reference signal (PRS), a phase tracking reference signal (PTRS), or the like may be transmitted as the DL-RS.

The synchronization signal may be, for example, at least one of a primary synchronization signal (PSS) and a secondary synchronization signal (SSS). A signal block including the SS (PSS or SSS) and the PBCH (and the DMRS for the PBCH) may be referred to as an SS/PBCH block, an SS block (SSB), or the like. It is noted that, the SS, the SSB, or the like may also be referred to as a reference signal.

Furthermore, in the radio communication system 1, a measurement reference signal (sounding reference signal (SRS)), a demodulation reference signal (DMRS), or the like may be transmitted as an uplink reference signal (UL-RS). It is noted that, the DMRSs may be referred to as "user terminal-specific reference signals (UE-specific reference signals)".

### (Base Station)

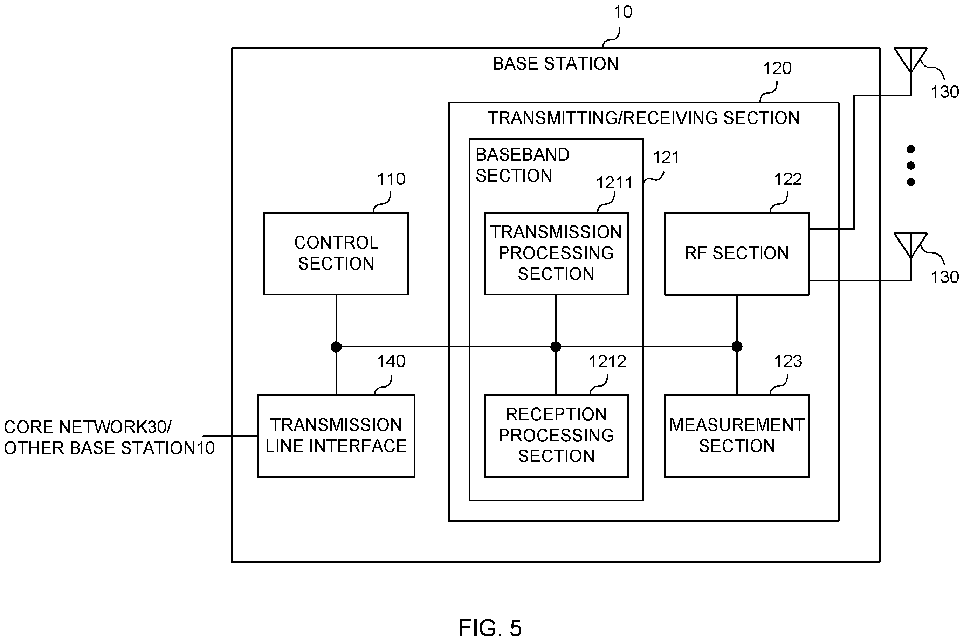

Fig. 5 is a diagram illustrating an example of a configuration of the base station according to one embodiment. The base station 10 includes a control section 110, a transmitting/receiving section 120, a transmitting/receiving antenna 130, and a transmission line interface 140. It is noted that one or more of the control sections 110, one or more of the transmitting/receiving sections 120, one or more of the transmitting/receiving antennas 130, and one or more of the transmission line interfaces 140 may be included.

It is noted that this example mainly describes a functional block which is a characteristic part of the present embodiment, and it may be assumed that the base station 10 also has another functional block necessary for radio communication. A part of processing of each section described below may be omitted.

The control section 110 controls the entire base station 10. The control section 110 can be constituted by a controller, a control circuit, or the like, which is described based on common recognition in the technical field to which the present disclosure relates.

The control section 110 may control signal generation, scheduling (for example, resource allocation or mapping), and the like. The control section 110 may control transmission/reception, measurement, and the like using the transmitting/receiving section 120, the transmitting/receiving antenna 130, and the transmission line interface 140. The control section 110 may generate data to be transmitted as a signal, control information, a sequence, and the like, and may forward the data, the control information, the sequence, and the like to the transmitting/receiving section 120. The control section 110 may perform call processing (such as configuration or releasing) of a communication channel, management of the state of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can be constituted by a transmitter/receiver, an RF circuit, a baseband circuit, a filter, a phase shifter, a measurement circuit, a transmission/reception circuit, and the like, which are described based on common recognition in the technical field to which the present disclosure relates.

The transmitting/receiving section 120 may be constituted as an integrated transmitting/receiving section, or may be constituted by a transmitting section and a receiving section. The transmitting section may include the transmission processing section 1211 and the RF section 122. The receiving section may be constituted by the reception processing section 1212, the RF section 122, and the measurement section 123.

The transmitting/receiving antenna 130 can be constituted by an antenna described based on common recognition in the technical field to which the present disclosure relates, for example, an array antenna.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a Tx beam or a reception beam using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like on, for example, data, control information, and the like acquired from the control section 110, to generate a bit string to be transmitted.

The transmitting/receiving section 120 (transmission processing section 1211) may perform transmission processing such as channel encoding (which may include error correction encoding), modulation, mapping, filtering processing, discrete Fourier transform (DFT) processing (if necessary), inverse fast Fourier transform (IFFT) processing, precoding, or digital-analog conversion on the bit string to be transmitted, to output a baseband signal.

The transmitting/receiving section 120 (RF section 122) may perform modulation to a radio frequency band, filtering processing, amplification, and the like on the baseband signal, and may transmit a signal in the radio frequency band via the transmitting/receiving antenna 130.

Meanwhile, the transmitting/receiving section 120 (RF section 122) may perform amplification, filtering processing, demodulation to a baseband signal, and the like on the signal in the radio frequency band received by the transmitting/receiving antenna 130.

The transmitting/receiving section 120 (reception processing section 1212) may apply reception processing such as analog-digital conversion, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 120 (measurement section 123) may perform measurement on the received signal. For example, the measurement section 123 may perform radio resource management (RRM) measurement, channel state information (CSI) measurement, and the like based on the received signal. The measurement section 123 may measure received power (for example, reference signal received power (RSRP)), received quality (for example, reference signal received quality (RSRQ), a signal to interference plus noise ratio (SINR), a signal to noise ratio (SNR)), signal strength (for example, received signal strength indicator (RSSI)), propagation path information (for example, CSI), and the like. A measurement result may be output to the control section 110.

The transmission line interface 140 may transmit/receive a signal (backhaul signaling) to and from an apparatus included in the core network 30, another base stations 10, and the like, and may acquire, transmit, and the like user data (user plane data), control plane data, and the like for the user terminal 20.

It is noted that, the transmitting section and the receiving section of the base station 10 in the present disclosure may include at least one of the transmitting/receiving section 120, the transmitting/receiving antenna 130, and the transmission line interface 140.

The transmitting/receiving section 120 may receive at least one of the first report value related to the UL coherent type for each band, the second report value related to the UL coherent type for each band combination, and the third report value related to the UL coherent type for each band in the band combination.

The control section 110 may control transmission of information related to the codebook type configured based on at least one of the first report value, the second report value, and the third report value.

### (User Terminal)

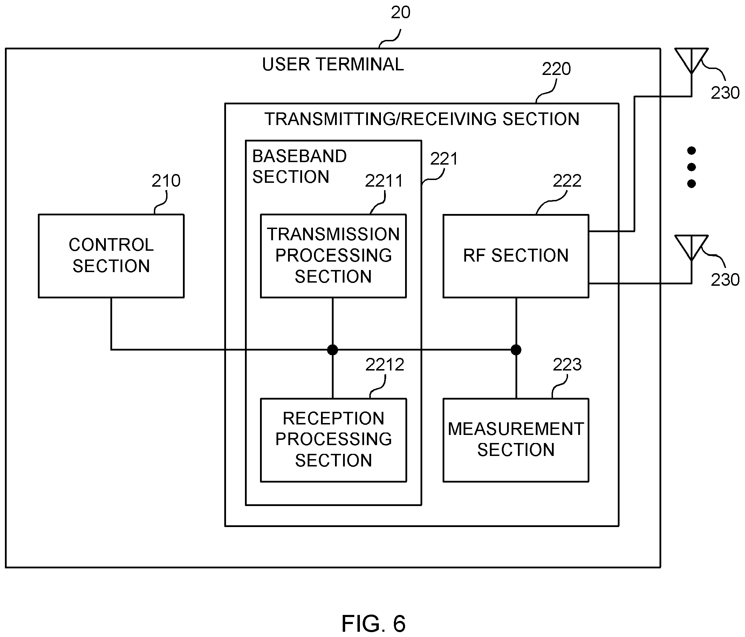

Fig. 6 is a diagram illustrating an example of a configuration of the user terminal according to one embodiment. The user terminal 20 includes a control section 210, a transmitting/receiving section 220, and a transmitting/receiving antenna 230. It is noted that one or more of the control sections 210, one or more of the transmitting/receiving sections 220, and one or more of the transmitting/receiving antennas 230 may be included.

It is noted that, although this example mainly describes functional blocks of a characteristic part of the present embodiment, it may be assumed that the user terminal 20 includes other functional blocks that are necessary for radio communication as well. A part of processing of each section described below may be omitted.

The control section 210 controls the entire user terminal 20. The control section 210 can include a controller, a control circuit, and the like that are described based on common recognition in the technical field related to the present disclosure.

The control section 210 may control signal generation, mapping, and the like. The control section 210 may control transmission/reception, measurement, and the like using the transmitting/receiving section 220 and the transmitting/receiving antenna 230. The control section 210 may generate data to be transmitted as a signal, control information, a sequence, and the like, and may transfer the data, the control information, the sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can include a transmitter/receiver, an RF circuit, a baseband circuit, a filter, a phase shifter, a measurement circuit, a transmission/reception circuit, and the like that are described based on common recognition in the technical field related to the present disclosure.

The transmitting/receiving section 220 may be formed as an integrated transmitting/receiving section, or may include a transmitting section and a receiving section. The transmitting section may include the transmission processing section 2211 and the RF section 222. The receiving section may be configured by the reception processing section 2212, the RF section 222, and the measurement section 223.

The transmitting/receiving antenna 230 can include an antenna that is described based on common recognition in the technical field related to the present disclosure, for example, an array antenna or the like.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a Tx beam and a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like, for example, on data, control information, and the like acquired from the control section 210, to generate a bit string to be transmitted.

The transmitting/receiving section 220 (transmission processing section 2211) may perform transmission processing such as channel encoding (which may include error correction encoding), modulation, mapping, filtering processing, DFT processing (if necessary), IFFT processing, precoding, or digital-analog conversion on the bit string to be transmitted, to output a baseband signal.

It is noted that whether to apply DFT processing may be determined based on configuration of transform precoding. In a case where transform precoding is enabled for a given channel (for example, PUSCH), the transmitting/receiving section 220 (transmission processing section 2211) may perform DFT processing as the transmission processing in order to transmit the channel using a DFT-s-OFDM waveform, and otherwise, DFT processing need not be performed as the transmission processing.

The transmitting/receiving section 220 (RF section 222) may perform modulation to a radio frequency band, filtering processing, amplification, and the like on the baseband signal, to transmit a signal in the radio frequency band via the transmitting/receiving antenna 230.

Meanwhile, the transmitting/receiving section 220 (RF section 222) may perform amplification, filtering processing, demodulation to a baseband signal, and the like on the signal in the radio frequency band received by the transmitting/receiving antenna 230.

The transmitting/receiving section 220 (reception processing section 2212) may apply reception processing such as analog-digital conversion, FFT processing, IDFT processing (if necessary), filtering processing, demapping, demodulation, decoding (which may include error correction decoding), MAC layer processing, RLC layer processing, or PDCP layer processing on the acquired baseband signal to acquire user data and the like.

The transmitting/receiving section 220 (measurement section 223) may perform measurement on the received signal. For example, the measurement section 223 may perform RRM measurement, CSI measurement, and the like based on the received signal. The measurement section 223 may measure received power (for example, RSRP), received quality (for example, RSRQ, SINR, or SNR), signal strength (for example, RSSI), propagation path information (for example, CSI), and the like. A measurement result may be output to the control section 210.

It is noted that the transmitting section and the receiving section of the user terminal 20 in the present disclosure may include at least one of the transmitting/receiving section 220 and the transmitting/receiving antenna 230.

The transmitting/receiving section 220 may transmit at least one of the first report value related to the UL coherent type for each band, the second report value related to the UL coherent type for each band combination, and the third report value related to the UL coherent type for each band in the band combination. The transmitting/receiving section 220 may receive information related to the codebook type (alternatively, configured/notified after at least one of the first report value, the second report value, and the third report value is reported) that is configured based on at least one of the first report value, the second report value, and the third report value.

The control section 210 may perform a control operation so as to report at least one of the first report value related to the UL coherent type for each band, the second report value related to the UL coherent type for each band combination, and the third report value related to the UL coherent type for each band in the band combination.

The control section 210 may perform a control operation so as to report at least one of the first report value, the second report value, and the third report value, and to report another report value that is related to the UL coherent type for each band and is different from the first report value. The control section 210 may perform a control operation so as to report the total value of the numerical values corresponding to the UL coherent type as the second report value related to the UL coherent type for each band combination. The control section 210 may separately control whether to report at least one of the first report value, the second report value, and the third report value, and whether to report another report value (alternatively, whether reporting is required).

### (Hardware Configuration)

It is noted that the block diagrams that have been used to describe the above embodiments illustrate blocks in functional units. These functional blocks (components) are implemented in arbitrary combinations of at least one of hardware and software. Further, the method of implementing each functional block is not particularly limited. That is, each functional block may be implemented by a single apparatus physically or logically aggregated, or may be implemented by directly or indirectly connecting two or more physically or logically separate apparatuses (in a wired manner, a radio manner, or the like, for example) and using these apparatuses. The functional blocks may be implemented by combining software with the above-described single apparatus or the above-described plurality of apparatuses.

Here, the function includes, but is not limited to, determining, judging, calculating, computing, processing, deriving, investigating, searching, ascertaining, receiving, transmitting, outputting, accessing, solving, selecting, choosing, establishing, comparing, assuming, expecting, regarding, broadcasting, notifying, communicating, forwarding, configuring, reconfiguring, allocating, mapping, assigning, and the like. For example, a functional block (component) that has a transmission function may be referred to as a transmitting section (transmitting unit), a transmitter, and the like. In any case, as described above, the implementation method is not particularly limited.

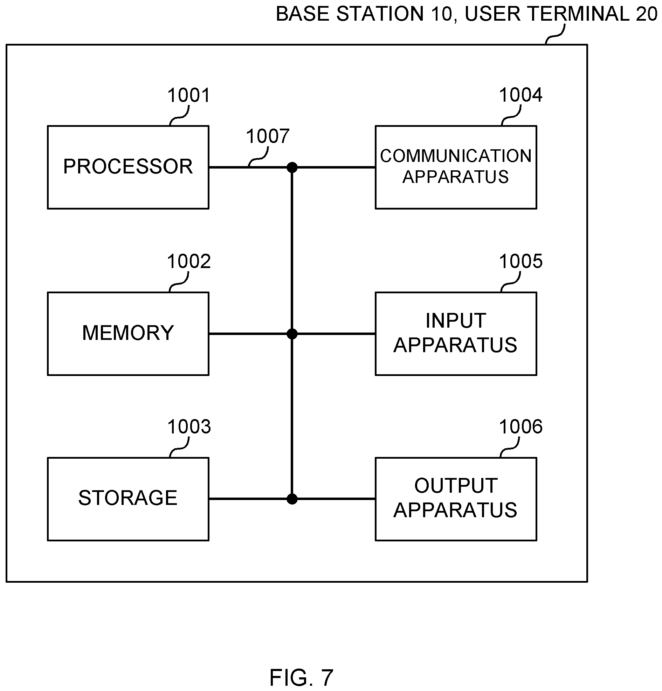

For example, the base station, the user terminal, and the like according to one embodiment of the present disclosure may function as a computer that executes the processing of the radio communication method of the present disclosure. Fig. 7 is a diagram illustrating an example of the hardware configuration of the base station and the user terminal according to one embodiment. Physically, the above-described base station 10 and user terminal 20 may be formed as a computer apparatus that includes a processor 1001, a memory 1002, a storage 1003, a communication apparatus 1004, an input apparatus 1005, an output apparatus 1006, a bus 1007, and the like.

It is noted that in the present disclosure, the terms such as an apparatus, a circuit, a device, a section, and a unit can be interchangeable with each other. The hardware configuration of the base station 10 and the user terminal 20 may be designed to include one or more of the apparatuses illustrated in the drawings, or may be designed not to include some apparatuses.

For example, although only one processor 1001 is illustrated, a plurality of processors may be included. Further, the processing may be executed by one processor, or the processing may be executed by two or more processors simultaneously or sequentially, or using other methods. It is noted that the processor 1001 may be implemented by one or more chips.

Each function of the base station 10 and the user terminal 20 is implemented by given software (program) being read on hardware such as the processor 1001 and the memory 1002, by which the processor 1001 performs operations, controlling communication via the communication apparatus 1004, and controlling at least one of reading and writing of data at the memory 1002 and the storage 1003.

The processor 1001 controls the entire computer by, for example, operating an operating system. The processor 1001 may be implemented by a central processing unit (CPU) including an interface with peripheral equipment, a control apparatus, an operation apparatus, a register, and the like. For example, at least a part of the above-described control section 110 (210), transmitting/receiving section 120 (220), and the like may be implemented by the processor 1001.

The processor 1001 reads programs (program codes), software modules, data, and the like from at least one of the storage 1003 and the communication apparatus 1004 into the memory 1002, and performs various types of processing according to these. As the program, a program that causes a computer to execute at least a part of the operations described in the above-described embodiment is used. For example, the control section 110 (210) may be implemented by control programs that are stored in the memory 1002 and that operate on the processor 1001, and other functional blocks may be implemented likewise.

The memory 1002 is a computer-readable recording medium, and may include, for example, at least one of a read only memory (ROM), an erasable programmable ROM (EPROM), an electrically EPROM (EEPROM), a random access memory (RAM), and other appropriate storage media. The memory 1002 may be referred to as a register, a cache, a main memory (primary storage apparatus), and the like. The memory 1002 can store programs (program codes), software modules, and the like that are executable for implementing the radio communication method according to one embodiment of the present disclosure.

The storage 1003 is a computer-readable recording medium, and may include, for example, at least one of a flexible disk, a floppy (registered trademark) disk, a magneto-optical disk (for example, a compact disc ROM (CD-ROM) and the like), a digital versatile disk, a Blu-ray (registered trademark) disk), a removable disk, a hard disk drive, a smart card, a flash memory device (for example, a card, a stick, or a key drive), a magnetic stripe, a database, a server, and other appropriate storage media. The storage 1003 may be referred to as a "secondary storage apparatus".

The communication apparatus 1004 is hardware (transmission/reception device) for performing inter-computer communication via at least one of a wired network and a wireless network, and is referred to as, for example, a network device, a network controller, a network card, a communication module, and the like. The communication apparatus 1004 may include a high frequency switch, a duplexer, a filter, a frequency synthesizer, and the like in order to implement, for example, at least one of frequency division duplex (FDD) and time division duplex (TDD). For example, the transmitting/receiving section 120 (220), the transmitting/receiving antenna 130 (230), and the like described above may be implemented by the communication apparatus 1004. The transmitting/receiving section 120 (220) may be implemented by physically or logically separating the transmitting section 120a (220a) and the receiving section 120b (220b) from each other.

The input apparatus 1005 is an input device for receiving input from the outside (for example, a keyboard, a mouse, a microphone, a switch, a button, a sensor, and the like). The output apparatus 1006 is an output device that performs output to the outside (for example, a display, a speaker, a light emitting diode (LED) lamp, or the like). It is noted that the input apparatus 1005 and the output apparatus 1006 may be an integrated configuration (for example, touch panel).

The apparatuses such as the processor 1001 and the memory 1002 are connected by the bus 1007 for communicating information. The bus 1007 may be formed using a single bus, or may be formed using different buses for each apparatus.

Further, the base station 10 and the user terminal 20 may include hardware such as a microprocessor, a digital signal processor (DSP), an application specific integrated circuit (ASIC), a programmable logic device (PLD), or a field programmable gate array (FPGA), and some or all of the functional blocks may be implemented by using the hardware. For example, the processor 1001 may be implemented using at least one of these pieces of hardware.

### (Modifications)

It is noted that terms described in the present disclosure and terms necessary for understanding the present disclosure may be replaced with terms that have the same or similar meanings. For example, a channel, a symbol, and a signal (signal or signaling) may be interchangeable with one another. Further, the signal may be a message. The reference signal can be abbreviated as an RS, and may be referred to as a pilot, a pilot signal, and the like, depending on which standard applies. Further, a component carrier (CC) may be referred to as a cell, a frequency carrier, a carrier frequency, and the like.

A radio frame may include one or more periods (frames) in the time domain. Each of the one or more periods (frames) included in the radio frame may be referred to as a subframe. Further, the subframe may include one or more slots in the time domain. The subframe may be a fixed time duration (for example, 1 ms) that is not dependent on numerology.

Here, the numerology may be a communication parameter used for at least one of transmission and reception of a given signal or channel. For example, the numerology may indicate at least one of subcarrier spacing (SCS), a bandwidth, a symbol length, a cyclic prefix length, a transmission time interval (TTI), the number of symbols per TTI, a radio frame configuration, specific filtering processing performed by a transceiver in the frequency domain, and specific windowing processing performed by a transceiver in the time domain.

The slot may include one or more symbols in the time domain (orthogonal frequency division multiplexing (OFDM) symbols, single carrier frequency division multiple access (SC-FDMA) symbols, and the like). Also, the slot may be a time unit based on numerology.

The slot may include a plurality of mini slots. Each mini slot may include one or more symbols in the time domain. Further, the mini slot may be referred to as a sub-slot. Each mini slot may include fewer symbols than the slot. A PDSCH (or PUSCH) transmitted in a time unit larger than the mini slot may be referred to as "PDSCH (PUSCH) mapping type A". A PDSCH (or a PUSCH) transmitted using a mini slot may be referred to as PDSCH (PUSCH) mapping type B.

A radio frame, a subframe, a slot, a mini slot, and a symbol each represent a time unit in signal transmission. The radio frame, the subframe, the slot, the mini slot, and the symbol may be called by other applicable names, respectively. It is noted that time units such as a frame, a subframe, a slot, a mini slot, and a symbol in the present disclosure may be interchangeable with each other.

For example, one subframe may be referred to as TTI, a plurality of consecutive subframes may be referred to as TTI, or one slot or one mini slot may be referred to as TTI. That is, at least one of the subframe and the TTI may be a subframe (1 ms) in the existing LTE, may be a period shorter than 1 ms (for example, one to thirteen symbols), or may be a period longer than 1 ms. It is noted that a unit representing a TTI may be referred to as a slot, a mini slot, or the like instead of a subframe.

Here, a TTI refers to, for example, a minimum time unit of scheduling in radio communication. For example, in the LTE system, a base station performs scheduling to allocate radio resources (a frequency bandwidth, transmit power, and the like that can be used in each user terminal) to each user terminal in TTI units. It is noted that the definition of a TTI is not limited to this.

A TTI may be a transmission time unit of a channel-coded data packet (transport block), a code block, a codeword, and the like or may be a processing unit of scheduling, link adaptation, and the like It is noted that, when a TTI is given, a time interval (for example, the number of symbols) to which a transport block, a code block, a codeword, or the like is actually mapped may be shorter than the TTI.

It is noted that, when one slot or one mini slot is referred to as a TTI, one or more TTls (that is, one or more slots or one or more mini slots) may be a minimum time unit of scheduling. The number of slots (the number of mini slots) constituting the minimum time unit of scheduling may be controlled.

A TTI having a time duration of 1 ms may be referred to as a usual TTI (TTI in 3GPP Rel. 8 to 12), a normal TTI, a long TTI, a usual subframe, a normal subframe, a long subframe, a slot, or the like. A TTI that is shorter than the usual TTI may be referred to as a shortened TTI, a short TTI, a partial TTI (or fractional TTI), a shortened subframe, a short subframe, a mini slot, a subslot, a slot, or the like.

It is noted that, a long TTI (such as a usual TTI or a subframe) may be replaced with a TTI having a time duration exceeding 1 ms. A short TTI (such as a shortened TTI) may be replaced with a TTI having a TTI length less than the TTI length of a long TTI and more than or equal to 1 ms.

A resource block (RB) is the unit of resource allocation in the time domain and the frequency domain, and may include one or more contiguous subcarriers in the frequency domain. The number of subcarriers included in the RB may be the same regardless of the numerology, and may be twelve, for example. The number of subcarriers included in an RB may be determined based on a numerology.

An RB may include one or more symbols in the time domain, and may have a length of one slot, one mini slot, one subframe, or one TTI. One TTI, one subframe, and the like may each include one or more resource blocks.

It is noted that one or more RBs may be referred to as a physical resource block (PRB), a subcarrier group (SCG), a resource element group (REG), a PRB pair, an RB pair, and the like.

Furthermore, a resource block may include one or more resource elements (REs). For example, one RE may be a radio resource domain of one subcarrier and one symbol.

A bandwidth part (BWP) (which may be referred to as a partial bandwidth or the like) may represent a subset of contiguous common resource blocks (RBs) for a given numerology in a given carrier. Here, the common RB may be specified by the index of the RB based on a common reference point of the carrier. PRBs may be defined in a BWP and numbered within the BWP.

The BWP may include a BWP for UL (UL BWP) and a BWP for DL (DL BWP). For the UE, one or more BWPs may be configured within one carrier.

At least one of the configured BWPs may be active, and the UE does not have to assume transmission/reception of a given signal/channel outside the active BWP. It is noted that a "cell", a "carrier", and the like in the present disclosure may be interchangeable with "BWP".

It is noted that the structures of radio frames, subframes, slots, mini slots, symbols, and the like described above are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol length, the length of cyclic prefix (CP), and the like can be variously changed.

The information, parameters, and the like described in the present disclosure may be represented using absolute values, or may be represented using relative values with respect to given values, or may be represented using other corresponding information. For example, a radio resource may be instructed by a given index.

The names used for parameters and the like in the present disclosure are in no respect limiting. Further, any mathematical expression or the like that uses these parameters may differ from those explicitly disclosed in the present disclosure. Since various channels (PUCCH, PDCCH, and the like) and information elements can be identified by any suitable names, various names allocated to these various channels and information elements are not restrictive names in any respect.

The information, signals, and the like described in the present disclosure may be represented using any of a variety of different technologies. For example, data, an instruction, a command, information, a signal, a bit, a symbol, a chip, and the like, which may be referred to throughout the above description, may be represented by a voltage, a current, an electromagnetic wave, a magnetic field or a magnetic particle, an optical field or an optical photon, or any combination of these.

Information, signals, and the like can be output in at least one of a direction from a higher layer to a lower layer or a direction from a lower layer to a higher layer. Information, signals, and the like may be input and output via a plurality of network nodes.

Input and output information, signals, and the like may be stored in a specific location (for example, memory), or may be managed using a measurement table. The input/output information, signals, and the like can be overwritten, updated, or appended. The output information, signals, and the like may be deleted. Information, signals, and the like that have been input may be transmitted to another apparatus.

Notification of information may be performed not only by using the aspects/embodiments described in the present disclosure but also using another method. For example, the notification of information in the present disclosure may be performed by using physical layer signaling (for example, downlink control information (DCI) or uplink control information (UCI)), higher layer signaling (for example, radio resource control (RRC) signaling, broadcast information (master information block (MIB)), system information block (SIB), or the like), or medium access control (MAC) signaling), another signal, or a combination thereof.

It is noted that the physical layer signaling may be referred to as Layer 1/Layer 2 (L1/L2) control information (L1/L2 control signal), L1 control information (L1 control signal), and the like. Further, the RRC signaling may be referred to as an RRC message, and may be, for example, an RRC Connection Setup message, an RRC Connection Reconfiguration message, and the like. Further, notification of the MAC signaling may be performed using, for example, a MAC control element (CE).

Also, notification of given information (for example, notification of information to the effect that "X holds") does not necessarily have to be sent explicitly, and can be sent implicitly (for example, by not notifying this given information, by reporting another piece of information, and the like).

Determination may be performed using a value represented by one bit (0 or 1), or may be performed using a Boolean represented by true or false, or may be performed by comparing numerical values (for example, comparison with a given value).

Software, regardless of whether it is referred to as software, firmware, middleware, microcode, or a hardware description language, or referred to by another name, should be interpreted broadly to mean an instruction, an instruction set, a code, a code segment, a program code, a program, a subprogram, a software module, an application, a software application, a software package, a routine, a subroutine, an object, an executable file, an execution thread, a procedure, a function, and the like.

Moreover, software, instructions, information, and the like may be transmitted and received via communication media. For example, when software is transmitted from a website, a server, or another remote source by using at least one of a wired technology (coaxial cable, optical fiber cable, twisted pair, digital subscriber line (DSL), or the like) and a wireless technology (infrared rays, microwaves, and the like), at least one of the wired technology and the wireless technology is included within the definition of a transmission medium.

The terms "system" and "network" used in the present disclosure may be used interchangeably. The "network" may mean an apparatus (for example, a base station) included in the network.

In the present disclosure, terms such as "precoding", "precoder", "weight (precoding weight)", "quasi-co-location (QCL)", "transmission configuration indication state (TCI state)", "spatial relation", "spatial domain filter", "transmit power", "phase rotation", "antenna port", "antenna port group", "layer", "number of layers", "rank", "resource", "resource set", "resource group", "beam", "beam width", "beam angle", "antenna", "antenna element", and "panel" can be used interchangeably.

In the present disclosure, terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier", can be used interchangeably. The base station may be referred to as a term such as a macro cell, a small cell, a femto cell, or a pico cell.

The base station can accommodate one or more (for example, three) cells. In a case where the base station accommodates a plurality of cells, the entire coverage area of the base station can be partitioned into a plurality of smaller areas, and each smaller area can provide communication services through a base station subsystem (for example, small base station for indoors (remote radio head (RRH))). The term "cell" or "sector" refers to a part or the whole of a coverage area of at least one of the base station and the base station subsystem that performs a communication service in this coverage.

In the present disclosure, the terms such as "mobile station (MS)", "user terminal", "user equipment (UE)", and "terminal" can be used interchangeably.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terms.

At least one of the base station and the mobile station may be referred to as a transmission apparatus, a reception apparatus, a radio communication apparatus, and the like. It is noted that at least one of the base station or the mobile station may be a device mounted on a moving body (moving object), a moving body itself, and the like.

The moving body refers to a movable object, the moving speed is arbitrary, and naturally includes a case in which the moving body is stopped. The moving body includes, for example, a vehicle, a transport vehicle, an automobile, a motorcycle, a bicycle, a connected car, an excavator, a bulldozer, a wheel loader, a dump truck, a forklift, a train, a bus, a rear car, a human-powered vehicle, a ship and other watercraft, an airplane, a rocket, an artificial satellite, a drone, a multicopter, a quadcopter, a balloon, and objects mounted thereon, and is not limited thereto. Further, the moving body may be a moving body that autonomously travels based on an operation command.

The moving body may be a transportation (for example, a car, an airplane, or the like), an unmanned moving body (for example, a drone, an autonomous car, or the like), or a (manned or unmanned) robot. It is noted that at least one of the base station and the mobile station also includes an apparatus that does not necessarily move during a communication operation. For example, at least one of the base station and the mobile station may be an Internet of Things (IoT) device such as a sensor.

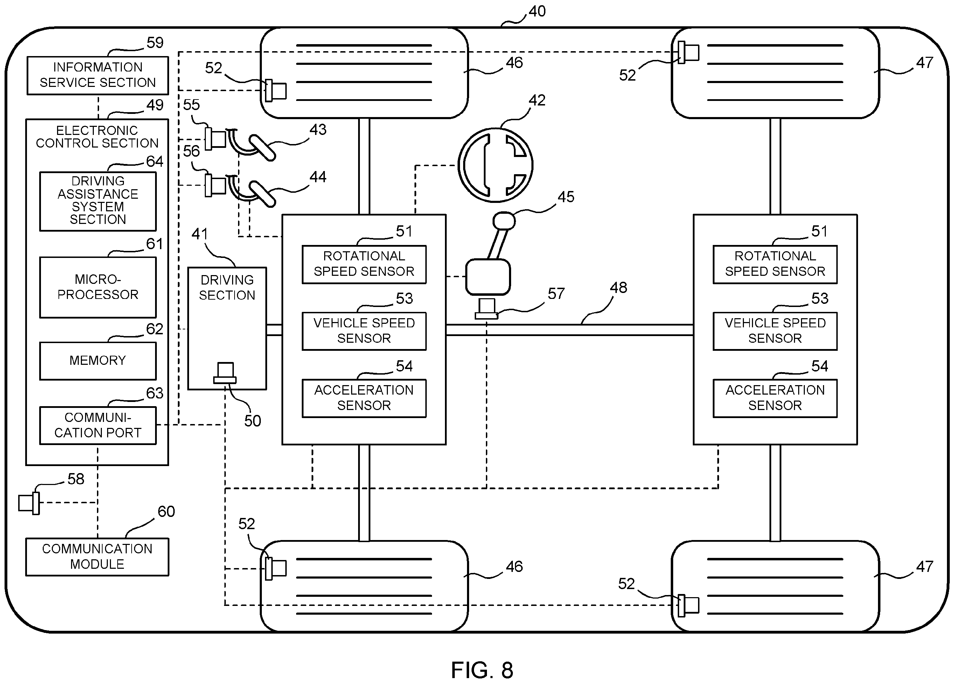

Fig. 8 is a diagram illustrating an example of a vehicle according to one embodiment. A vehicle 40 includes a drive section 41, a steering section 42, an accelerator pedal 43, a brake pedal 44, a shift lever 45, left and right front wheels 46, left and right rear wheels 47, an axle 48, an electronic control section 49, various sensors (includes a current sensor 50, a rotation speed sensor 51, an air pressure sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The drive section 41 includes, for example, at least one of an engine, a motor, and a hybrid of an engine and a motor. The steering section 42 includes at least a steering wheel (also referred to as a handle), and is configured to steer at least one of the front wheel 46 and the rear wheel 47 based on the operation of the steering wheel operated by a user.

The electronic control section 49 includes a microprocessor 61, a memory (ROM, RAM) 62, and a communication port (for example, an input/output (IO) port) 63. Signals from the various sensors 50 to 58 provided in the vehicle are input to the electronic control section 49. The electronic control section 49 may be referred to as an electronic control section (ECU).

The signals from the various sensors 50 to 58 include a current signal from the current sensor 50 that senses the current of the motor, a rotation speed signal of the front wheel 46/the rear wheel 47 acquired by the rotation speed sensor 51, an air pressure signal of the front wheel 46/the rear wheel 47 acquired by the air pressure sensor 52, a vehicle speed signal acquired by the vehicle speed sensor 53, an acceleration signal acquired by the acceleration sensor 54, a depression amount signal of the accelerator pedal 43 acquired by the accelerator pedal sensor 55, a depression amount signal of the brake pedal 44 acquired by the brake pedal sensor 56, an operation signal of the shift lever 45 acquired by the shift lever sensor 57, a detection signal for detecting an obstacle, a vehicle, a pedestrian, and the like acquired by the object detection sensor 58, and the like.

The information service section 59 includes various devices for providing (outputting) various types of information such as driving information, traffic information, and entertainment information, such as a car navigation system, an audio system, a speaker, a display, a television, and a radio, and one or more ECUs that control these devices. The information service section 59 provides various types of information/services (for example, multimedia information/multimedia services) to an occupant of the vehicle 40 using information acquired from an external device via the communication module 60 or the like.

The information service section 59 may include an input device (for example, a keyboard, a mouse, a microphone, a switch, a button, a sensor, a touch panel, or the like) that receives an input from the outside, or may include an output device (for example, a display, a speaker, an LED lamp, a touch panel, or the like) that performs an output to the outside.

A driving assistance system section 64 includes various devices for providing functions for preventing an accident in advance and reducing a driving load of a driver, such as a millimeter wave radar, light detection and ranging (LiDAR), a camera, a positioning locator (for example, global navigation satellite system (GNSS) or the like), map information (for example, a high definition (HD) map, an autonomous vehicle (AV) map, and the like), a gyro system (for example, an inertial measurement unit (IMU), an inertial navigation system (INS), or the like), an artificial intelligence (Al) chip, and an AI processor, and one or more ECUs for controlling these devices. Further, the driving assistance system section 64 also transmits and receives various types of information via the communication module 60 so as to achieve a driving assistance function or an automatic driving function.

The communication module 60 can communicate with the microprocessor 61 and components of the vehicle 40 via the communication port 63. For example, the communication module 60 transmits and receives data (information) to and from the drive section 41, the steering section 42, the accelerator pedal 43, the brake pedal 44, the shift lever 45, the left and right front wheels 46, the left and right rear wheels 47, the axle 48, the microprocessor 61 and the memory (ROM, RAM) 62 in the electronic control section 49, and the various sensors 50 to 58 provided in the vehicle 40 via the communication port 63.

The communication module 60 is a communication device that can be controlled by the microprocessor 61 of the electronic control section 49 and can communicate with an external device. For example, various types of information are transmitted and received to and from an external device via radio communication. The communication module 60 may be either inside or outside the electronic control section 49. The external device may be, for example, the base station 10, the user terminal 20, or the like described above. Furthermore, the communication module 60 may be, for example, at least one of the base station 10 and the user terminal 20 described above (may function as at least one of the base station 10 and the user terminal 20).

The communication module 60 may transmit at least one of the above-described signals from the various sensors 50 to 58 input to the electronic control section 49, information obtained based on the signals, and information based on an input from the outside (user) obtained via the information service section 59 to the external device via radio communication. The electronic control section 49, the various sensors 50 to 58, the information service section 59, and the like may be referred to as input units that receive inputs. For example, the PUSCH transmitted by the communication module 60 may include information based on the above input.

The communication module 60 receives various types of information (traffic information, traffic signal information, inter-vehicle information, and the like) transmitted from an external device, and displays the information on the information service section 59 provided in the vehicle. The information service section 59 may be referred to as an output unit that outputs information (for example, information is output to a device such as a display or a speaker based on a PDSCH (or data/information decoded from the PDSCH) received by the communication module 60).

The communication module 60 also stores various types of information received from external devices in the memory 62 available by the microprocessor 61. Based on the information stored in the memory 62, the microprocessor 61 may control the drive section 41, the steering section 42, the accelerator pedal 43, the brake pedal 44, the shift lever 45, the left and right front wheels 46, the left and right rear wheels 47, the axle 48, the various sensors 50 to 58, and the like provided in the vehicle 40.

The base station in the present disclosure may be interchangeable with a user terminal. For example, each aspect/embodiment of the present disclosure may be applied to a configuration in which communication between the base station and the user terminal is replaced with communication among a plurality of user terminals (which may be referred to as, for example, device-to-device (D2D), vehicle-to-everything (V2X), and the like). In this case, the user terminal 20 may have the function of the above-described base station 10. In addition, the terms such as "uplink" and "downlink" may be interchangeable with terms corresponding to terminal-to-terminal communication (for example, "sidelink"). For example, an uplink channel, a downlink channel, and the like may be interchangeable with a sidelink channel.

Similarly, the user terminal in the present disclosure may be replaced with a base station. In the case, the base station 10 may have the function of the above-mentioned user terminal 20.

In the present disclosure, the operation performed by the base station may be performed by an upper node thereof in some cases. In a network including one or a plurality of network nodes with a base station, it is clear that various operations performed for communication with a terminal can be performed by a base station, one or more network nodes (for example, mobility management entity (MME) and serving-gateway (S-GW) are possible, but are not limitations) other than the base station, or a combination thereof.

Each aspect/embodiment described in the present disclosure may be used alone, used in combination, or switched in association with execution. Further, the order of processing procedures, sequences, flowcharts, and the like of the aspects/embodiments described in the present disclosure may be re-ordered as long as there is no inconsistency. For example, for the method described in the present disclosure, various step elements are presented by using an illustrative order, and the method is not limited to the presented specific order.

Each aspect/embodiment described in the present disclosure may be applied to a system using Long-Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG(x is, for example, an integer or decimal)), Future Radio Access (FRA), New-Radio Access Technology (RAT), New Radio (NR), New radio access (NX), Future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or another appropriate radio communication method, a next generation system extended, modified, generated, or prescribed based on those described above, and the like. Further, a plurality of systems may be combined (for example, a combination of LTE or LTE-A and 5G, and the like) and applied.

The phrase "based on" used in the present disclosure does not mean "based only on", unless otherwise specified. In other words, the phrase "based on" means both "based only on" and "based at least on".

Any reference to an element using designations such as "first" and "second" used in the present disclosure does not generally limit the amount or order of these elements. These designations can be used in the present disclosure, as a convenient way of distinguishing between two or more elements. In this way, reference to the first and second elements does not imply that only two elements may be employed, or that the first element must precede the second element in some way.

The term "determining" used in the present disclosure may include a wide variety of operations. For example, "determining" may be regarded as "determining" judging, calculating, computing, processing, deriving, investigating, looking up, search, inquiry (for example, looking up in table, database, or another data structure), asgivening, and the like.

Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on.

In addition, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

"Determining" may be interchangeable with "assuming", "expecting", "considering", and the like.

The "maximum transmit power" described in the present disclosure may mean the maximum value of the transmit power, may mean the nominal UE maximum transmit power, or may mean the rated UE maximum transmit power.

The terms "connected" and "coupled" used in the present disclosure, or all variations thereof mean all direct or indirect connections or coupling between two or more elements, and can include the presence of one or more intermediate elements between two elements "connected" or "coupled" with each other. The coupling or connection between the elements may be physical, logical, or a combination of these. For example, the term "connection" is interchangeable with "access".

In the present disclosure, when two elements are connected, the two elements can be considered to be "connected" or "coupled" with each other by using one or more electrical wires, cables, printed electrical connections, and the like, and using, as some non-limiting and non-inclusive examples, electromagnetic energy and the like having a wavelength in a radio frequency domain, a microwave domain, and an optical (both visible and invisible) domain.

In the present disclosure, the phrase "A and B are different" may mean "A and B are different from each other". It is noted that the phrase may mean that "A and B are different from C". The terms such as "leave", "coupled", and the like may be interpreted similarly to "different".

In the present disclosure, when "include", "including", and variations thereof are used, these terms are intended to be inclusive similarly to the term "comprising". The term "or" used in the present disclosure is intended not to be an exclusive-OR.

In the present disclosure, when articles in English such as "a", "an", and "the" are added in translation, the present disclosure may include the plural forms of nouns that follow these articles.

Although the invention according to the present disclosure has been described in detail above, it is obvious to a person skilled in the art that the invention according to the present disclosure is by no means limited to the embodiments described in the present disclosure. The invention according to the present disclosure can be embodied with various corrections and in various modified aspects, without departing from the spirit and scope of the invention defined based on the description of claims. Consequently, the description of the present disclosure is provided only for the purpose of explaining examples, and should by no means be construed to limit the invention according to the present disclosure in any way.

## Claims

1. A terminal comprising:
a control section configured to perform control to report at least one of a first report value related to a UL coherent type for each band, a second report value related to the UL coherent type for each band combination, and a third report value related to the UL coherent type for each band in the band combination; and
a receiving section configured to receive information on a codebook type configured based on at least one of the first report value, the second report value, and the third report value.

2. The terminal according to claim 1, wherein the control section is configured to perform control to report at least one of the first report value, the second report value, and the third report value, and to report other report value different from the first report value, the other report value being related to the UL coherent type for each band.

3. The terminal according to claim 1 or 2, wherein the control section is configured to perform control to report a total value of numerical values corresponding to the UL coherent type as the second report value related to the UL coherent type for each band combination.

4. The terminal according to any one of claims 1 to 3, wherein the control section is configured to separately control whether to report at least one of the first report value, the second report value, and the third report value, and whether to report the other report value.

5. A radio communication method of a terminal, the radio communication method comprising the steps of:
performing control to report at least one of a first report value related to a UL coherent type for each band, a second report value related to the UL coherent type for each band combination, and a third report value related to the UL coherent type for each band in the band combination; and
receiving information on a codebook type configured based on at least one of the first report value, the second report value, and the third report value.

6. A base station comprising:
a receiving section configured to receive at least one of a first report value related to a UL coherent type for each band, a second report value related to the UL coherent type for each band combination, and a third report value related to the UL coherent type for each band in the band combination; and
a control section configured to control transmission of information on a codebook type configured based on at least one of the first report value, the second report value, and the third report value.
